# EUROPÄISCHE PATENTSCHRIFT

(11) **EP 0 874 222 B1**
(45) Veröffentlichungstag und Bekanntmachung des Hinweises auf die Patenterteilung: **19.02.2003**
(21) Anmeldenummer: 98106199.7
(22) Anmeldetag: 04.04.1998
(51) Int. Cl.: G01C 23/00

(54) **Allwetter-Navigations-Display für Hubschrauber**
All-weather navigation display for helicopters
Dispositif d'affichage de navigation tous temps pour hélicoptère

(30) Priorität: 23.04.1997 DE 19716941
(43) Veröffentlichungstag der Anmeldung: 28.10.1998
(73) Patentinhaber: Eurocopter Deutschland GmbH, 86609 Donauwörth (DE)
(72) Erfinder: Schmidt, Ralph-Andreas, 85596 Poing (DE)
(74) Vertreter: Baum, Wolfgang, Dipl.-Ing.

(56) Entgegenhaltungen:
- DE-A- 4 220 145
- US-A- 4 845 495
- US-A- 5 416 705
- US-A- 5 475 594

## Beschreibung

Die Erfindung betrifft ein Allwetter-Navigations-Display für Hubschraubernach dem Oberbegriff von Anspruch 1.

Die Avionik eines AWRH-Hubschraubers (AWRH = **A**ll**w**etterfähigkeit für **R**ettungs**h**ubschrauber) gewährleistet die Durchführung einer SAR-Mission unter nahezu allen Wetterbedingungen. Hauptbestandteil der AWRH-Avionik ist das Displaysystem mit dessen Symbolik. Dabei dient die Symbolik dem Hubschrauberpiloten zur Flugführung, Navigation, Hinderniserkennung und zur Beurteilung verschiedener Systemzustände.

Unterschiedliche kontroll- und Display Systeme werden zum Beispiel in US-A-5 475 594, US-A-5 416 705 und US-A-4 845 495 offenbart.

Gerade unter den schwierigen Einsatzbedingungen eines AWRH-Hubschraubers ist es notwendig, ein Anzeigesystem zu schaffen, das die von verschiedenen Sensoren bzw. Navigationsgeräten stammenden Informationen dem Pilote übersichtlich, schnell erfaßbar und vollständig darbietet.

Es ist das Ziel der Erfindung, ein für diesen Zweck universell einsatzbares Display zu schaffen, das einerseits die üblichen Regeln für Navigationsdisplays einhält, aber andererseits insbesondere in der kritischen Anflugphase entsprechend verbesserte Informationsmöglichkeiten bietet, gegen Systemausfälle weitgehend abgesichert ist und sowohl individuellen Vorlieben des Piloten als auch den schnell wechselnden Erfordernissen in den verschiedenen Flugphasen effizient und schnell angepaßt werden kann.

Gemäß der Erfindung wird dies durch die im kennzeichnenden Teil von Anspruch 1 dargelegten Merkmale erreicht. Einzelheiten der Erfindung ergeben sich aus den abhängigen Ansprüchen und der Beschreibung, in der anhand der Zeichnung ein verwirklichtes und erprobtes Ausführungsbeispiel ausführlich erörtert ist. Es zeigen
- Fig. 1: ein AWRH-Display mit FFK's, LSK's, Drehgebern und Shift-Taste,
- Fig. 2: ein AWRH-Display im NAV Betriebsmodus mit den Formaten PFD und HSI
- Fig. 3: die ADI Darstellung im Betriebsmodus "NAV"
- Fig. 4: die IAS Darstellung im Betriebsmodus "NAV"
- Fig. 5: die ALT Darstellung im Betriebsmodus "NAV"
- Fig. 6: die Darstellung der vertikalen Geschwindigkeit im Betriebsmodus "NAV"
- Fig. 7: die Darstellung der Leistungseinstellung im Betriebsmodus "NAV"
- Fig. 8:: die Zeigerstellungen des PFD Formates im stationären Reiseflug
- Fig. 9:: das HSI Format im Rose Modus
- Fig. 10: das HSI Format im Sector Modus
- Fig. 11: die LSK's in NAV Modus
- Fig. 12: das "NAV"-Display mit hinterlegter Karte
- Fig. 13: das AWRH-Display im APP Betriebsmodus
- Fig. 14: die ADI Darstellung im Betriebsmodus "APP"
- Fig. 15: die Darstellung der Flugrichtungsskala mit digitaler Headingangabe
- Fig. 16: die Hindernissymbolik im Betriebsmodus "APP"
- Fig. 17: den Anflugtunnel im Betriebsmodus "APP"
- Fig. 18: den Anflugtunnel im Betriebsmodus "APP" in einer weiteren Phase
- Fig. 19: die LSK's im APP Modus.

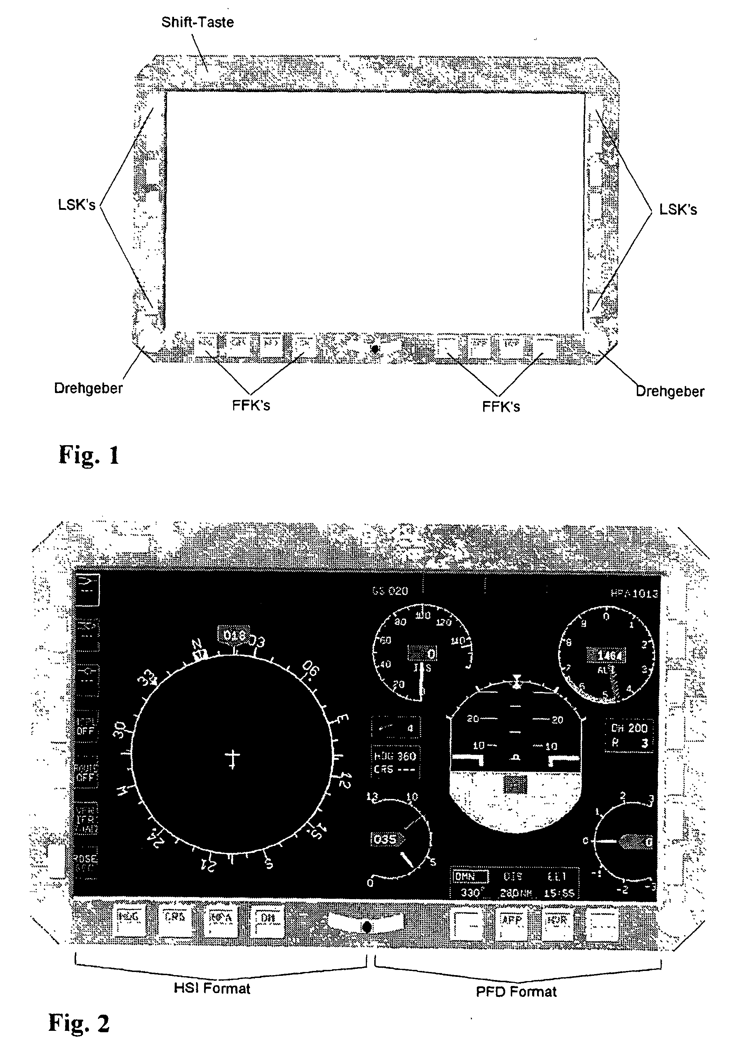

### Hardwareaufbau des Displays (Fig. 1)

Die Darstellung der Symbolik erfolgt auf einem redundanten Display mit einer nutzbaren Anzeigefläche von 284mm x 160mm. Die Anzeigefläche des Displays wird von einem Displayrahmen umgeben, auf dem verschiedene Anzeige- und Bedienelemente untergebracht sind.

Im unteren Bereich des Displayrahmens sind 8 Drucktasten bzw. FFK's (Fixed Function Keys) und zwei Drehgeber symmetrisch angeordnet. Den FFK's sind Aufgaben zugeordnet, die unabhängig vom Betriebsmodus des Displays die gleichen Funktionen ausüben. Im Normalbetrieb des Displaysystems dienen die rechten FFK's der Umschaltung zwischen den Betriebsmodi NAV (Navigationsmodus), APP (Approach Modus) und HVR (Hover Modus). Die linken FFK's dienen der Eingabe von HDG (Heading), CRS (Course), HPA (Luftdruckeinstellung), und der DH (Decision Height). Die Eingabe dieser Werte erfolgt über den linken oder rechten Drehgeber, nachdem die gewünschte Funktion über den entsprechenden FFK selektiert wurde. Eine Übersicht der Funktionen kann der Tabelle 1 entnommen werden.

Die linke und rechte Seite des Displayrahmens ist mit jeweils 7 Drucktasten bzw. LSK's (Line Select Keys) bestückt. Die Funktionen der LSK's richten sich nach dem Betriebsmodus (NAV, APP oder HVR) des Displaysystems. Eine Übersicht der Funktionen kann der Tabelle 2 entnommen werden.

Am linken oberen Displayrahmen befindet sich die Shift-Taste. Durch die Betätigung der Shift-Taste können die Funktionen der linken FFK's und LSK's auf die rechte Seite gelegt werden. Durch diese Maßnahme wird eine Redundanz jeder einzelnen Tastenfünktion erreicht, so daß der Ausfall einer einzelnen FFK- oder LSK-Taste nicht zum Verlust der Funktion führen kann. Nach einer nochmaligen Betätigung der Shift-Taste werden die Funktionen wieder auf die Tasten der linken Displayseite gelegt.

**Tab. 1:**

| Funktionen der FFK's | | |
|---|---|---|
| | Normalbetrieb | Shift-Betrieb |
| Funktionen der linken | | |
| FFK's | | |
| 1. FFK: | Auswahl des Headings | Auswahl "NAV" Modus |
| 2. FFK: | Auswahl des Courses | Auswahl "APP" Modus |
| 3. FFK: | Auswahl des Luftdruckes | Auswahl "HVR" Modus |
| 4. FFK: | Auswahl der Entscheidungshöhe | - |

| Funktionen der rechten FFK's | | |
|---|---|---|
| 5. FFK: | Auswahl "NAV" Modus | Auswahl des Headings |
| 6. FFK: | Auswahl "APP" Modus | Auswahl des Courses |
| 7. FFK: | Auswahl "HVR" Modus | Auswahl des Luftdruckes |
| 8. FFK: | - | Auswahl der Entscheidungshöhe |

**Tab. 2:**

| Funktionen der LSK's | | | | |
|---|---|---|---|---|
| | Normalbetrieb | | Shift-Betrieb | |
| | "NAV" Modus | "APP" Modus | "NAV" Modus | "APP" Modus |
| linke LSK's | | | | |
| 1. LSK: | NAV Pointer 1 | NAV Pointer 1 | - | - |
| 2. LSK: | NAV Pointer 2 | NAV Pointer 2 | - | - |
| 3. LSK: | NAV Pointer 3 | NAV Pointer 3 | - | - |
| 4. LSK: | Krankenhaus an/aus | ADI an/aus | - | - |
| 5. LSK: | Flugroute an/aus | Tunnel an/aus | - | - |
| 6. LSK: | VFR/IFR/Map/aus | Web an/aus | - | - |
| 7. LSK: | Rose/Sector | Map/Radar | - | - |

| rechte LSK's | | | | |
|---|---|---|---|---|
| 8. LSK: | - | - | NAV Pointer 1 | NAV Pointer 1 |
| 9. LSK: | - | - | NAV Pointter 2 | NAV Pointer 2 |
| 10. LSK: | - | - | NAV Pointer 3 | NAV Pointer 3 |
| 11. LSK: | - | - | Krankenhaus an/aus | ADI an/aus |
| 12. LSK: | - | - | Flugroute an/aus | Tunnel an/aus |
| 13. LSK: | - | - | VFR/IFR/Map/aus | Web an/aus |
| 14. LSK: | - | - | Rose/Sector | Map/Radar |

### Symbolik des AWRH-Displays

Die angezeigte Symbolik des AWRH-Hubschraubers hängt vom eingestellten Betriebsmodus (NAV, APP oder HVR) des Displaysystems ab. Der Betriebsmodus wird über die FFK's eingestellt, wie bereits in Absatz 2 erläutert.

### "NAV" Betriebsmodus (Fig. 2)

Der Betriebsmodus "NAV" entspricht einer konventionellen Anzeige der Flugführungs- und Navigationssymbolik, wobei die beiden Formate PFD (Primary Flight Display) und HSI (Horizontal Situation Indicator) in einer Split-Screen Darstellung nebeneinander angezeigt werden.

### Das PFD Format

Auf der rechten Seite des Displays wird das PFD Format dargestellt. Dieses Format beinhaltet die Anzeigen des ADI (künstlicher Horizont), der Fluggeschwindigkeit, der barometrischen Flughöhe, der vertikalen Geschwindigkeit, der Leistungseinstellung, der DME-Anzeige (Entfernungsangabe zum nächsten bzw. selektierten Wegepunkt) und mehrerer digitale Informationen, wie der Geschwindigkeit über Grund, dem eingestellten Luftdruck, dem Heading und Course, sowie verschiedener Status- und Warnmeldungen.

Dabei erfolgt die Darstellung der Fluggeschwindigkeit, der Flughöhe, der vertikalen Geschwindigkeit und der Leistungseinstellung auf Rundanzeigen. Diese Anzeigephilosophie der Rundanzeigen nutzt im Gegensatz zu einer Symbolik mit Linearanzeigen die schnellere Auffassung eines Sollwertes durch den Piloten aus. Auch die Abweichung von einem angestrebten Sollwert kann durch den Piloten besser und in einer kürzeren Zeit erkannt werden, da schon kleine Winkeländerungen des Zeigers im peripheren Blickbereich auffallen.

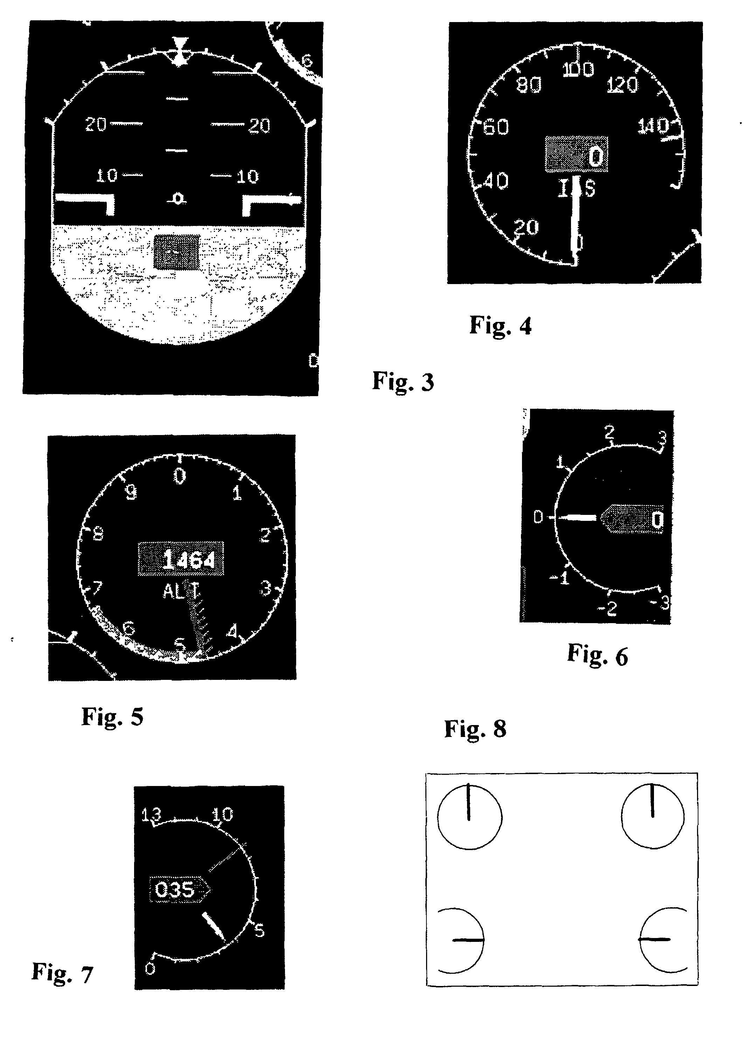

### Darstellung des künstlichen Horizontes "ADI" (Fig. 3)

Die Darstellung des künstlichen Horizontes "ADI" (Attitude Director Indicator) erfolgt zentral im PFD Format. Er dient zur Beurteilung der Nick- und Rollage des Hubschraubers. Die Hubschrauberreferenz bzw. die Hubschrauberlängsachse wird durch zwei gelbe Linien bzw. durch einen gelben Kreis im Zentrum des ADI definiert.

Die Skala der Nickachse ist in 5 ° Abschnitte unterteilt, wobei die Fläche über der Horizontlinie blau bzw. die Fläche unter der Horizontlinie braun hinterlegt ist. Die Skalenbeschriftung der Nickachse ist im Abstand von 10° Schritten angebracht. Die Rollskala (feststehend) befindet sich über dem ADI mit einem Anzeigebereich von ±60°. Die Skala ist in 10° Schritten unterteilt, wobei ein kurzer Teilstrich alle 10° und ein langer Teilstrich alle 30° angezeigt wird. Die Rollage wird durch ein kleines gelbes Dreieck auf der Innenseite der Skala angezeigt (Skypointer).

Bei Flughöhen unterhalb der Decision Height erscheint unter dem Symbol der Hubschrauberlängsachse eine umrahmte Flagge "DH" in der Farbe "Amber".

In Abhängigkeit der Hubschrauberavionik können links neben bzw. unter dem ADI die Glideslope - bzw. Localizer-Bars angezeigt werden. Sollte der Hubschrauber mit einem Flight Director ausgerüstet sein, erfolgt die Anzeige der horizontalen und vertikalen Flight-Director-Bars im Zentrum des ADIs.

### Darstellung der Fluggeschwindigkeit (Fig. 4)

Die Darstellung der Fluggeschwindigkeit erfolgt entsprechend der Standard-T-Anordnung links neben dem ADI, in einer leicht erhöhten Position auf einer Kreisbogenskala. Die Skala des Kreisbogens ist in einer Weise aufgeteilt, die den Geschwindigkeitszeiger im Reiseflug des Hubschraubers (100 Knoten) senkrecht nach oben zeigen läßt. Die Unterteilung des Kreisbogens entspricht Geschwindigkeitsabschnitten von 5 Knoten, wobei ein kurzer Teilstrich alle 5 Knoten und ein langer Teilstrich alle 10 Knoten angezeigt wird. Die Skalenbeschriftung ist im Abstand von 20 Knoten angebracht. Im Zentrum des Kreisbogens wird in Ergänzung zur analogen Anzeige die Fluggeschwindigkeit digital angezeigt. Unter dem digitalen Anzeigefenster weist die Beschriftung IAS (Airspeed) auf den dargestellten Parameter hin. Die Farbmarkierungen der Skala sind entsprechend der Norm und dem angewendeten Hubschraubermuster aufgebracht.

### Darstellung der Flughöhe (Fig. 5)

Die Darstellung der barometrischen Flughöhe erfolgt entsprechend der Standard-T-Anordnung rechts neben dem ADI, in einer leicht erhöhten Position auf einer Kreisskala. Eine Umdrehung des Zeigers entspricht einem barometrischen Höhenunterschied von 1000 Fuß. Die Skala des Kreises ist in einer Weise aufgeteilt, die den Höhenmesserzeiger im stationären IFR-Reiseflug senkrecht nach oben zeigen läßt. Die Unterteilung des Kreises entspricht Höhenabschnitten von 20 Fuß, wobei ein kurzer Teilstrich alle 20 Fuß und ein langer Teilstrich alle 100 Fuß angezeigt wird. Die Skalenbeschriftung ist im Abstand von 100 Fuß angebracht.

In einer Flughöhe bis 900 Fuß über Grund wird zur Anzeige der barometrischen Flughöhe zusätzlich die analoge Anzeige der Decision Height und der Radarhöhe eingeblendet. Über das Signal der Radarhöhe kann des Symbol der Bodenmarkierung (braun schraffierte Linie) bezüglich der barometrischen Flughöhe errechnet und dargestellt werden. Über der Bodenmarkierung erstreckt sich der blau markierte Kreisbogenbereich der Decision Height.

Der barometrische Höhenmesserzeiger wird in "Amber" dargestellt, sobald sich der Hubschrauber innerhalb der Decision Height aufhält. Im Zentrum des Kreises wird in Ergänzung zur analogen Anzeige die barometrische Flughöhe digital angezeigt. Unter dem digitalen Anzeigefenster weist die Beschriftung ALT (Altitude) auf den dargestellten Parameter hin.

### Darstellung der vertikalen Geschwindigkeit (Fig. 6)

Die Darstellung der vertikalen Geschwindigkeit erfolgt rechts unter dem ADI auf einem Kreisbogen. Die maximal angezeigten Werte für Sink- und Steigflug entsprechen ±3000 Fuß/Minute, wobei die nicht lineare Skala eine größere Spreizung im Bereich -1000 Fuß/Minute bis +1000 Fuß/Minute bietet. Die Unterteilung des Kreisbogens entspricht im Bereich zwischen -1000 Fuß/Minute und +1000 Fuß/Minute einer Sink- bzw. Steigrate von 100 Fuß/Minute, wobei ein kurzer Teilstrich alle 100 Fuß/Minute und ein langer Teilstrich alle 500 Fuß/Minute angezeigt wird. Außerhalb von diesem Bereich werden die kurzen Teilstriche alle 500 Fuß/Minute und die langen Teilstriche alle 1000 Fuß/Minute angezeigt. Im Horizontalflug zeigt der Zeiger des Variometers waagerecht nach links. Im Zentrum des Kreisbogens wird in Ergänzung zur analogen Anzeige die vertikale Geschwindigkeit digital angezeigt.

### Darstellung der Leistungseinstellung (Fig. 7)

Die Darstellung der Leistungseinstellung (Torque des Triebwerkes 1 und 2) erfolgt links unter dem ADI auf einem Kreisbogen. Die Skala reicht von 0% bis 130% Torque und ist in einer Weise aufgeteilt, die den Leistungszeiger während des Streckenfluges waagerecht nach rechts zeigen läßt. Die Skala der Leistungseinstellung wird in 10% Abschnitte unterteilt, wobei ein kurzer Teilstrich alle 10% und ein langer Teilstrich alle 50% angezeigt wird. Die Skalenbeschriftung ist im Abstand von 50% Schritten angebracht. Sollten sich die Torque-Werte des Triebwerkes 1 und 2 unterscheiden, spaltet sich der Torquezeiger in zwei eigenständige Zeiger auf. Die Zeiger sind mit "1" für Triebwerk 1 und "2" für Triebwerk 2 gekennzeichnet. Eine rote Linie zeigt die jeweilige Leistungsgrenze bezogen auf den Torque-Wert an.

### Zusammenfassung der Anzeigephilosophie im PFD Format (Fig. 8)

Die Parameter der Fluggeschwindigkeit, der Flughöhe, der vertikalen Geschwindigkeit und der Leistungseinstellung werden auf Rundanzeigen abgebildet. Damit verbunden ist eine schnelle Auffassung bei Abweichungen vom Sollwert, da bereits kleine Winkeländerungen der Zeiger im peripheren Sehfeld des Piloten erkannt werden. Die Skalen der vier Anzeigen sind in einer Weise angeordnet, die die beiden oberen Zeiger senkrecht nach oben bzw. die beiden unteren Zeiger waagerecht zeigen läßt. Diese symmetrische Anordnung erleichtert abermals die Auffassungsgabe des Piloten bei Abweichungen vom angestrebten Sollwert.

### Das HSI Format

Auf der linken Seite des Displays wird das HSI Format dargestellt. Dieses Format beinhaltet die Anzeigen des Kreiselkompasses, der Flugrichtung, der Radionavigation, der Flugroute und diverser Karteninformationen. Die Darstellung des HSI Formates kann sowohl im Sector- als auch im Rose-Modus erfolgen.

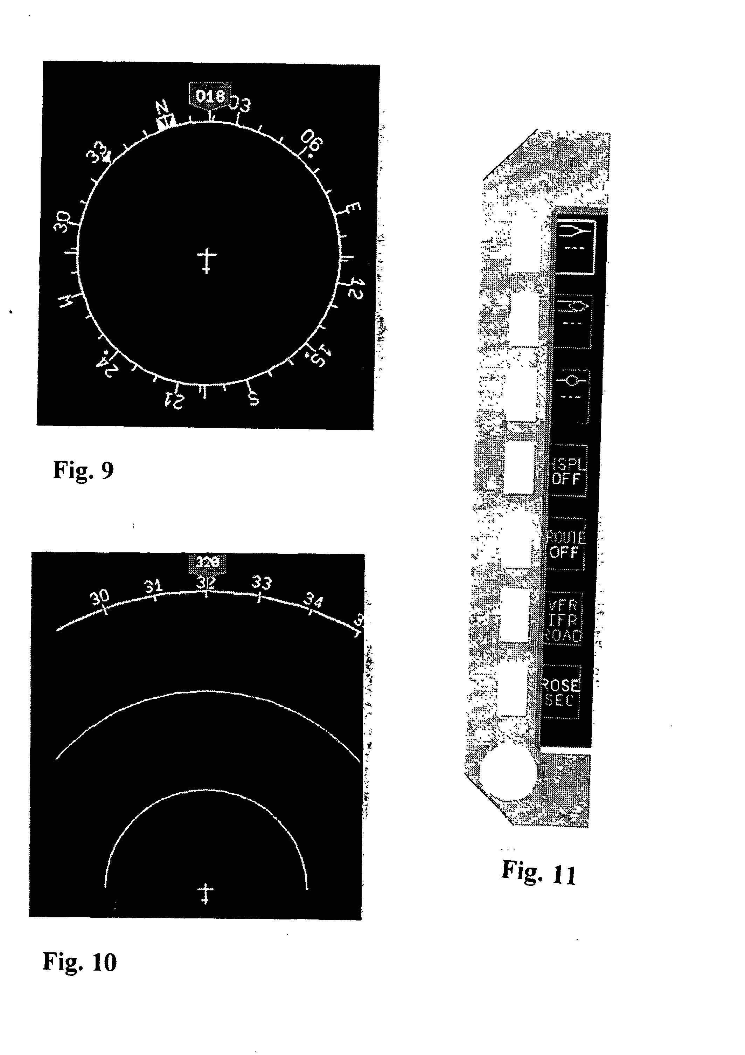

### Der Rose-Modus (Fig. 9)

Im Rose-Modus wird die komplette 360°-Kompaß-rose des Kreiselkompasses dargestellt. Über der Kompaßrose wird der aktuelle Flugkurs (Heading) digital angezeigt. Die Skala der Kompaßrose ist in 10° Abständen unterteilt, wobei ein kurzer Teilstrich alle 10° und ein langer Teilstrich alle 30° aufgetragen ist. Das Zentrum der Kompaßrose entspricht der gegenwärtigen Hubschrauberposition, die durch ein Luftfahrzeugsymbol widergespiegelt wird. Um das Luftfahrzeugsymbol drehen sich drei Navigationszeiger, die gemäß der Aufschaltung der Navigationssysteme Informationen über Peilung und Ablage zum selektierten Wegepunkt und zur Flugroute liefern. Die Richtung zum nächste Wegepunkt wird durch ein blaues Dreieck, das auf der Kompaßrose umläuft, repräsentiert. Die Eingabe des selektierten Headings wird durch den grünen Heading-Bug angezeigt.

Unter der Kompaßrose können drei verschieden Kartentypen (VFR-Chart, IFR-Chart, Road-Map) selektiert werden, die die Navigation sowohl im Instrumenten- als auch im Sichtflug verbessert.

Um dem Piloten im Kurvenflug die Richtungsänderungen zu erleichtern, wurden an den 90° Positionen feststehende gelbe Orientierungsstriche und an den 45° Positionen Orientierungspunkte angebracht.

### Der Sector-Modus (Fig. 10)

Im Sector-Modus wird ein 60° Sektor der Kompaßrose vor dem Luftfahrzeugsymbol dargestellt. Über dem Kompaßsektor wird das aktuelle Heading digital angezeigt. Die Skala der Kompaßrose ist in 10° Abschnitte unterteilt, wobei ein kurzer Teilstrich alle 10° und ein langer Teilstrich alle 30° aufgetragen ist.

Der Mittelpunkt des Kompaßsektors entspricht der gegenwärtigen Hubschrauberposition, die durch ein Luftfahrzeugsymbol widergespiegelt wird. Analog zum Rose-Modus werden auch im Sector-Modus drei Navigationszeiger dargestellt, die gemäß der Aufschaltung der Navigationssysteme Informationen über Peilung und Ablage zum selektierten Wegepunkt und zur Flugroute liefern. Die Richtung zum nächste Wegepunkt und das selektierte Heading wird auch hier durch ein blaues Dreieck bzw. durch den grünen Heading-Bug angezeigt.

### Die Funktionen der LSK's im "NAV" Betriebsmodus (Fig. 11)

Über die Funktionen der LSK's (Line Select Key) kann sich der Pilot die Anzeigen auf dem AWRH Display nach den Erfordernissen der Flugmission konfigurieren. Auf dem Display stehen 14 LSK's zur Verfügung, wobei im NAV Modus (Normalbetrieb) nur die sieben LSK's der linken Displayseite mit Funktionen belegt sind.

### Die LSK's zur Aufschaltung der Navigationszeiger

Die drei oberen LSK's dienen der Aufschaltung der Navigationszeiger auf die Navigationsquellen. Als Navigationsquellen stehen zwei NAV's, ein ADF und eine GPS-Navigation zur Verfügung. Prinzipiell kann jeder der drei Navigationszeiger auf jede der vier Navigationsquellen aufgeschaltet werden. Auf den Labels der LSK's ist das jeweilige Logo des Navigationszeigers inklusive der Frequenz und des Identifizierungskodes abgebildet.

### Der LSK "HSPL"

Über den LSK "HSPL" können im HSI Format Krankenhauspositionen relativ zur Hubschrauberposition eingeblendet werden. Das Label des LSKs wird mit ON (bei eingeschalteter Funktion) bzw. mit OFF (bei ausgeschalteter Funktion) bezeichnet.

### Der LSK "ROUTE"

Über den LSK "ROUTE" kann im HSI Format die Flugroute relativ zur Hubschrauberposition eingeblendet werden. Das Label des LSKs wird mit ON (bei eingeschalteter Funktion) bzw. mit OFF (bei ausgeschalteter Funktion) bezeichnet.

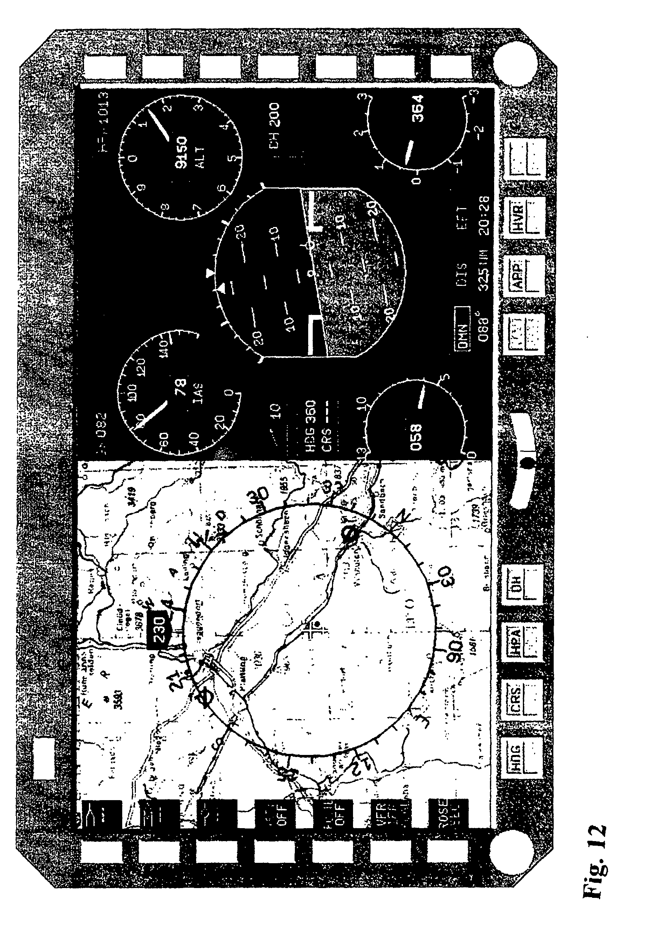

### Der LSK "VFR/IFR/ROAD" (Fig. 12)

Über den LSK "VFR/IFR/ROAD" kann im HSI Format ein Kartenhintergrund selektiert werden. Das Label des LSKs ist mit "VFR/IFR/ROAD" bezeichnet, wobei nach einer Kartenselektion der jeweilige Schriftzug der entsprechenden Karte hell aufleuchtet.

### Der LSK "ROSE/SEC"

Über den LSK "ROSE/SEC" kann das HSI Format zwischen Rose- und Sector-Modus umgeschaltet werden. Das Label des LSKs ist mit "ROSE/SEC" bezeichnet, wobei der Schriftzug "ROSE" im Rose Modus bzw. "SEC" im Sector Modus hell aufleuchtet.

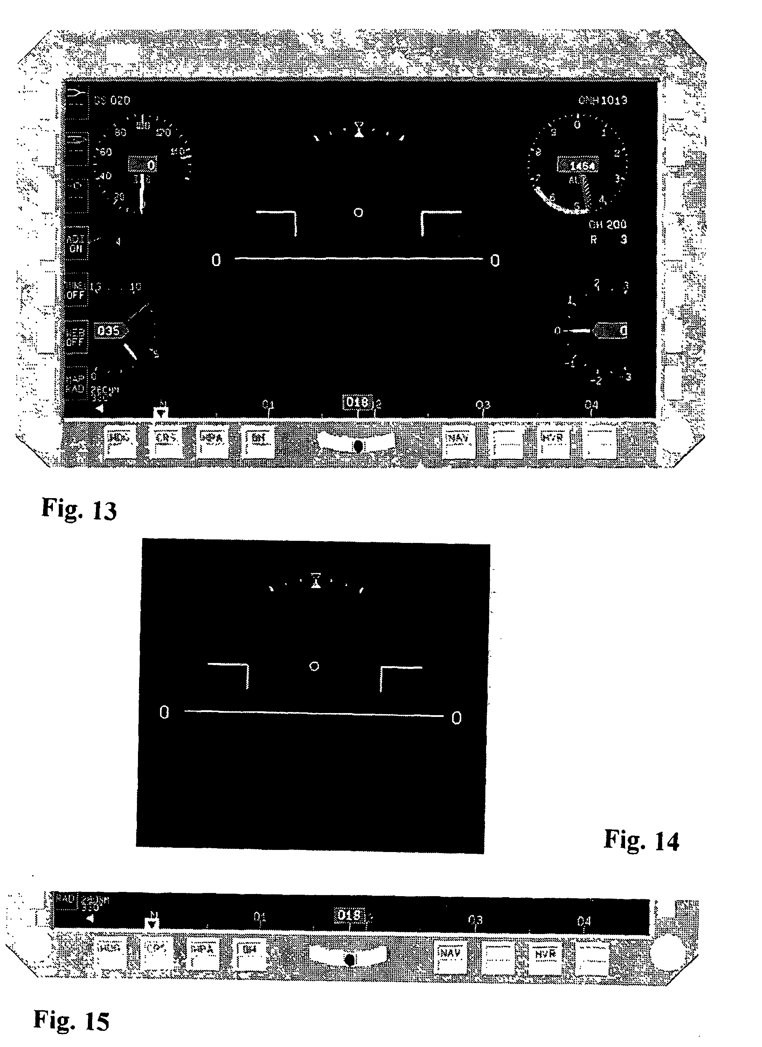

### Der "APP" Betriebsmodus (Fig. 13)

Der Betriebsmodus "APP" kommt insbesondere im Sensorflug des AWRH-Hubschraubers zur Anwendung. Dabei wird die gesamte Displayfläche für ein Anzeigeformat genutzt, um die Flugführungs- und Navigationssymbolik darzustellen. Alle Parameter des NAV Modus werden auch im APP Modus zur Anzeige gebracht. Die Anzeigephilosophie der beiden Modi sind identisch, um bei einem Wechsel die Adaption des Piloten zu minimieren.

### Darstellung der Fluggeschwindigkeit, der Flughöhe, der vertikalen Geschwindigkeit und der Leistungseinstellung

Die Darstellung der Fluggeschwindigkeit, der Flughöhe, der vertikalen Geschwindigkeit und der Leistungseinstellung erfolgt, wie auch im NAV Modus, nach dem gleichen Anzeigeschema auf Rundskalen. Jedoch sind die Parameter der Fluggeschwindigkeit und der Leistungseinstellung an den linken Bildschirmrand gerückt, um das Zentrum des Displays für weitere Informationen frei zu halten.

### Darstellung des künstlichen Horizontes "ADI" (Fig. 14)

Die Darstellung des künstlichen Horizontes erfolgt zentral im Display. Die Hubschrauberreferenz bzw. die Hubschrauberlängsachse wird durch zwei grüne abgewinkelte Linien bzw. durch einen grünen Kreis im Zentrum des Displays definiert. Als Horizontlinie kommt eine gelbe Linie zur Anwendung, die an beiden Enden mit "0" bezeichnet ist. Weitere Linien der Nickskala sind im Horizontalflug ausgeblendet, um das Bildschirmzentrum von unnötigen Linien freizuhalten. Bei größeren Nicklagen von ±10° erscheinen weitere Linien der Nickskala. Diese Skala ist in 5° Abschnitte unterteilt, wobei ein kurzer Teilstrich alle 5° und ein langer Teilstrich inklusive der Skalenbeschriftung alle 10° zur Anwendung kommt. An beiden Enden der Linien weisen im rechten Winkel kurze Linien in Richtung zur Horizontreferenz.

Die Rollskala (feststehend) befindet sich über dem AD mit einem Anzeigebereich von nur ±30°. Die Skala ist in 10° Schritten unterteilt, wobei ein kleiner Teilstrich alle 10° und ein großer Teilstrich alle 30° angezeigt wird. Bei einem Rollwinkel größer als 20° wird die Rollskala auf ±60° symmetrisch auf beiden Seiten verlängert. Die Rollage wird durch ein kleines grünes Dreieck auf der Innenseite der Skala angezeigt (Skypointer). Sollte der Hubschrauber mit einem Flight Director ausgerüstet sein, erfolgt die Anzeige der horizontalen und vertikalen Flight-Director-Bars im Zentrum des ADIs.

### Darstellung der Flugrichtung (Fig. 15)

Gemäß der Standard-T-Anordnung befindet sich die Darstellung der Flugrichtung (Headingskala) unterhalb des ADIs als horizontales Laufband. Die Angabe der aktuellen Flugrichtung erfolgt als Digitalwert an zentraler Position der Headingskala. Vergleichbar mit den Symbolen im NAV Modus werden die drei Navigationszeiger, der Wegepunktzeiger und der Heading-Bug auf der Headingskala an der entsprechenden Peilposition dargestellt. Über dem Symbol des nächsten Wegepunktes wird die DME-Information der Entfernung zum nächsten Wegepunkt angegeben. Läuft eines der Symbole (Navigationszeiger, Wegepunktzeiger, Heading-Bug) aus dem sichtbaren Bereich der Headingskala heraus, kippt das jeweilige Symbol um 90°. Das Symbol kommt am linken Skalenende zum Liegen, solange eine Linkskurve der kürzesten Richtungsänderung zur entsprechenden Peilposition entspricht. Entsprechend kommt das jeweilige Symbol rechts der Skala zum Liegen, solange eine Rechtskurve der kürzesten Richtungsänderung entspricht. Über dem gekippten Symbol des nächsten Wegepunktes wird neben der Entfernungsinformation zusätzlich die Peilrichtung (Bearing) angezeigt.

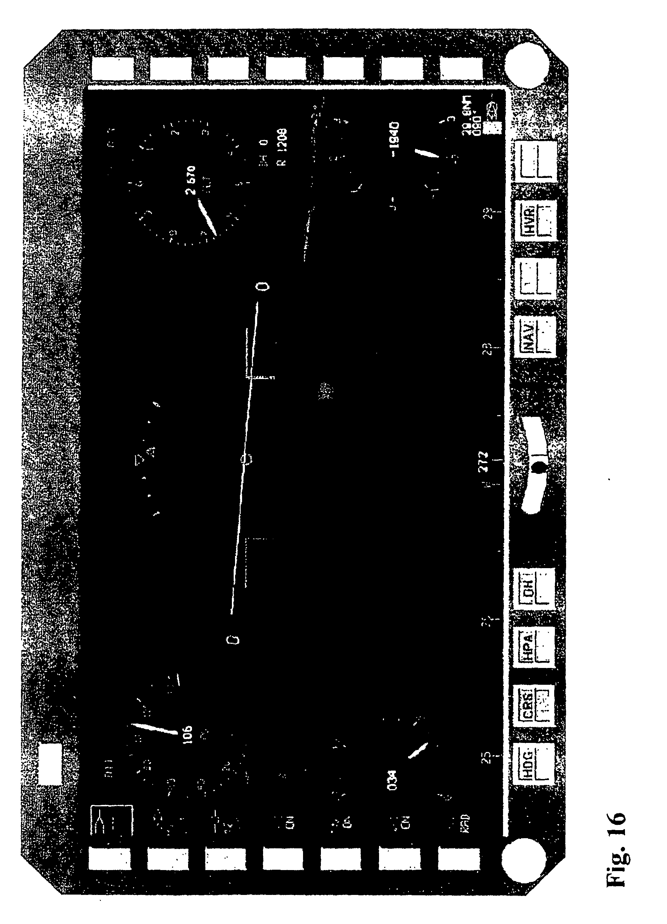

### Darstellung des Hindernissymbolik (Fig. 16)

Für den An- und Abflug steht dem Piloten des AWRH-Hubschraubers eine Hindernissymbolik zur Verfügung. Diese Symbolik soll dem Piloten innerhalb der Hinderniskulisse die Möglichkeit eröffnen, Hindernisse rechtzeitig zu identifizieren und ihnen auszuweichen.

Da sich im Tiefstflug jedes Objekt - auch der Boden - als Hindernis für den Hubschrauber darstellt, wurde als Hindernissymbolik ein Hindernisnetz ausgewählt. Dieses Netz wird in Echtzeit aus den Informationen eines Radarsensors ermittelt und auf dem Display als rechteckige Maschen dargestellt. Die Form einer rechteckigen Masche wurde zu Gunsten einer besseren Orientierung im Kurvenflug einer quadratischen Masche vorgezogen. Die Farbe des Netzes richtet sich nach der Netzhöhe (bzw. Hindernishöhe) in Relation zur Hubschrauberhöhe, sowie nach dem Flugvektor des Hubschraubers. Netzpunkte, die die aktuelle Hubschrauberposition übersteigen werden rot dargestellt. Alle verbleibenden Netzpunkte werden in einem grünen Farbton angezeigt. Diese farbliche Unterteilung in kritische und unkritische Hindernisse erleichtert die Aufgabe des Piloten bei der Wahl des Flugweges erheblich. Die Höhe des Netzes über den Hindernissen entspricht der eingestellten Decision Height. Somit bleibt der Sicherheitsabstand zwischen den Hindernissen und dem Netz für den Piloten frei wählbar. In der Berechnung des Netzes (Anstieg vor einem Hindernis) wird die Flugrichtung und die Fluggeschwindigkeit einbezogen. Bei Flügen in geringen Höhe über dem Netz werden Netzlinien in einer größeren Entfernung zum Hubschrauber zu Gunsten einer besseren Übersicht ausgeblendet. Rot dargestellte Netzpunkte bleiben unabhängig von der Entfernung erhalten.

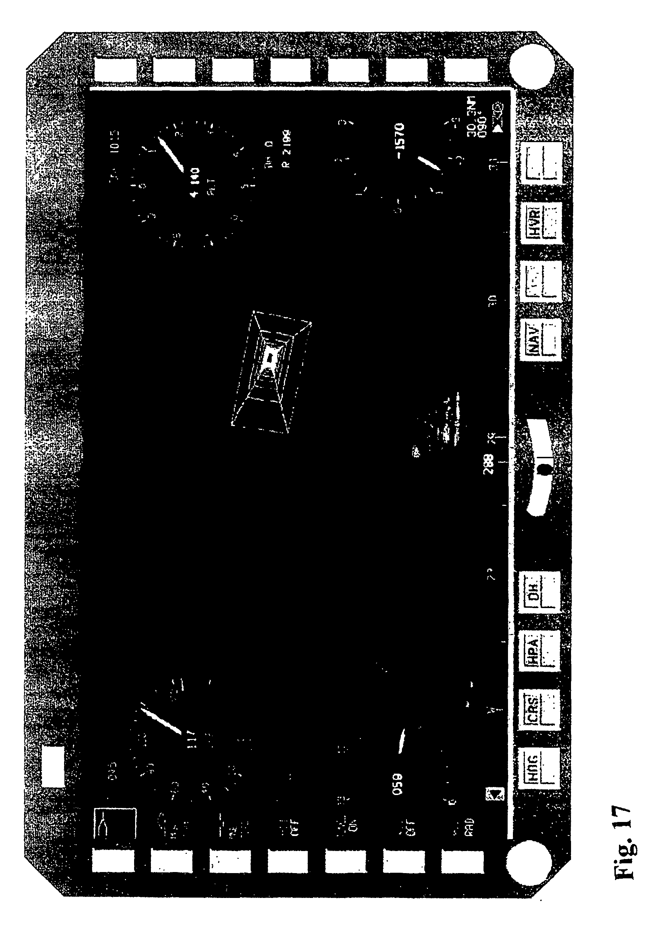

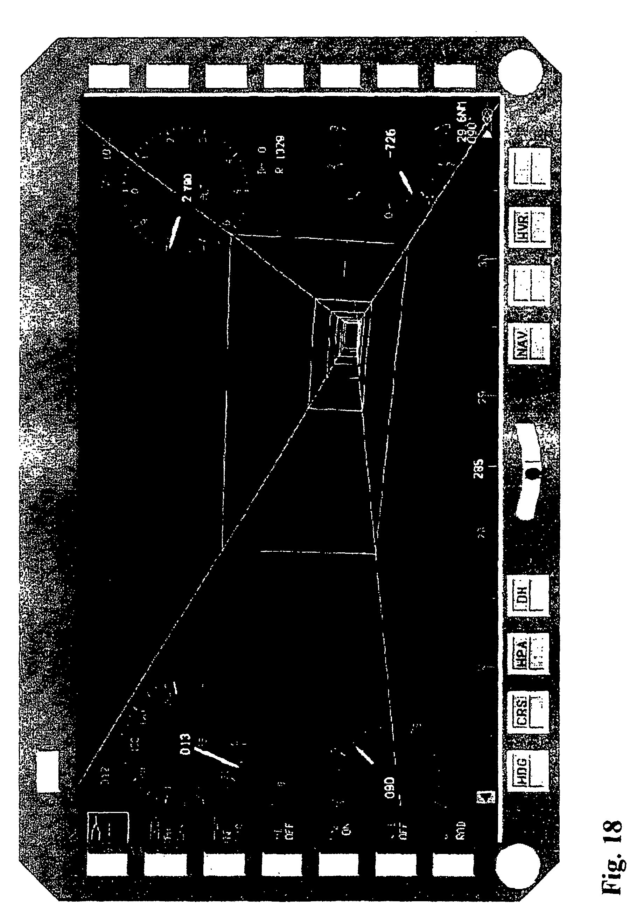

### Darstellung des An- und Abflugtunnels (Fig. 17 und 18)

Als Flugführungssymbolik während des An- und Abfluges wird dem Piloten im Betriebsmodus "APP" ein räumlicher Flugtunnel des Sollweges auf dem Display des Hubschraubers dargestellt. Der Vorteil der Darstellung eines räumlichen Flugpfades besteht in der Tatsache, daß nicht nur die momentane Ablage von Sollkurs angezeigt wird (wie bei einem Kreuzzeigerinstrument), sondern ein Blick in die zukünftige Flugroute möglich wird. Insbesondere bei gekrümmten Anflügen oder aber auch bei kurzen Anflügen wirkt sich dieser "Blick in die Zukunft" besonders positiv aus. Der Tunnel wird durch eine Aneinanderreihung mehrerer Tunneltore gebildet. Jedes Tunneltor besitzt einen rechteckigen Querschnitt mit 30m horizontaler Breite und 20m senkrechter Höhe. Der Abstand zweier Tore ist konstant und beträgt 70m. Um dem Piloten die Position des Hubschraubers zwischen Tunneleingang und Tunnelausgang zu verdeutlichen existiert eine kleine Strichmarkierung am rechten Tunnelpfosten. Die Position der Strichmarkierung entspricht der gegenwärtigen Position des Hubschraubers im Tunnel, wobei eine hohe Position der Markierung dem Tunnelanfang und eine tiefe Position der Markierung dem Tunnelende entspricht.

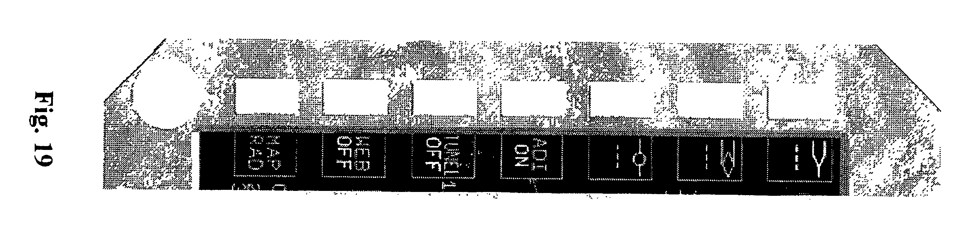

### Die Funktionen des LSK's im "APP" Betriebsmodus (Fig. 19)

Über die Funktionen der LSK's (Line Select Key) kann sich der Pilot die Anzeigen auf dem AWRH Display nach den Erfordernissen der Flugmission konfigurieren. Auf dem Display stehen 14 LSK's zur Verfügung, wobei im APP Modus (Normalbetrieb) nur die sieben LSK's der linken Displayseite mit Funktionen belegt sind.

### Die LSK's zur Aufschaltung der Navigationszeiger

Die Belegung der drei oberen LSK's entspricht analog der Belegung der drei oberen LSK's im NAV Modus. Sie dienen der Aufschaltung der Navigationszeiger auf die Navigationsquellen. Das Bedien- und Anzeigekonzept entspricht dem NAV Modus.

### Der LSK "ADI"

Über den LSK "ADI "kann der künstliche Horizont ein- bzw. ausgeblendet werden. Diese Funktion kann in bestimmten Flugzuständen überaus hilfreich sein, um das Zentrum des Displays von "überflüssigen" Linien freizuhalten. Das Label des LSKs wird mit ON (bei eingeschaltetem ADI) bzw. mit OFF (bei ausgeschaltetem ADI) bezeichnet.

### Der LSK "TUNEL"

Über den LSK "TUNEL" kann der An- und Abflugtunnel ein- bzw. ausgeschaltet werden. Das Label des LSKs ist mit ON (bei eingeschaltetem Tunnel) bzw. mit OFF (bei ausgeschaltetem Tunnel) bezeichnet.

### Der LSK "WEB"

Über den LSK "WEB" kann das Hindernisnetz ein- bzw. ausgeschaltet werden. Das Label des LSKs ist mit ON (bei eingeschaltetem Netz) und mit OFF (bei ausgeschaltetem Netz) bezeichnet.

### Der LSK "MAP/RAD"

Über den LSK "MAP/RAD" kann zwischen einer dreidimensionalen Karte und einem Radarsensorbild umgeschaltet werden. Beide Darstellungen werden im APP Modus als Hintergrundbild hinter den Flugführungs- und Navigationssymbolik dargestellt. Der Blickwinkel beider Darstellungen ist identisch. Er deckt von der gegenwärtigen Hubschrauberposition in Flugrichtung gesehen einen Bereich von 70° horizontal und 40° vertikal ab. Dabei dient die dreidimensionale Karte der räumlichen Orientierung außerhalb der Hinderniskulisse. Diese Art der Darstellung verdeutlicht in hohem Maße die Geländesituation und die Luftraumstruktur. Bei einer Annäherung an die Hinderniskulisse wird der Pilot in aller Regel auf das Radarsensorbild umschalten, da nur in diesem Modus die Identifizierung aller Hindernisse gewährleistet ist. Sowohl die dreidimensionalen Karte als auch das Radarsensorbild kann mit dem Hindernisnetz überlagert werden.

## Patentansprüche

1. Allwetter-Navigations-Display für Hubschrauber mit einer elektronischen Bildschirmanzeige-Vorrichtung, **dadurch gekennzeichnet, daß** die elektronisch ansteuerbare Displayfläche von einem Rahmen umgeben ist, auf dessen Unterkante Bedienungstasten mit festen Funktionen und auf dessen Seitenkanten Bedienungstasten mit variablen Funktionen angeordnet sind, wobei die Werte der ersteren mit an den Ecken des Rahmens angeordneten Drehgebern einstellbar sind und die aktuelle Funktion der letzteren auf dem Display angezeigt werden.

2. Allwetter-Navigationsdisplay nach Anspruch 1, **dadurch gekennzeichnet, daß** der Inhalt der Displayfläche beim Normalflug im Modus NAV, Navigationsmodus, auf der linken Displayflächenhälfte aus den Angaben über die HSI-Werte, Horizontal Situation Indicator, und auf der rechten Displayflächenhälfte aus den Angaben über die PFD-Werte, Primary Flight Display, bestehen und daß die Hälften über eine SHIFT-Taste im Display-Rahmen vertauschbar sind.

3. Allwetter-Navigationsdisplay nach Anspruch 2, **dadurch gekennzeichnet, daß** die Angaben über die HSI-Werte, Horizontal Situation Indicator, mit einer Landkarte unterlegbar sind.

4. Allwetter-Navigationsdisplay nach Anspruch 2 oder 3, **dadurch gekennzeichnet, daß** die wesentlichen Anzeigen aus Rund-Anzeigen bestehen und die Normalwerte derselben in horizontalen bzw. vertikalen Zeigerstellungen darstellbar sind.

5. Allwetter-Navigationsdisplay nach einem der vorhergehenden Ansprüche, **dadurch gekennzeichnet, daß** der Inhalt der Displayfläche beim Anflug im Modus APP, Approach Modus, aus den seitlich an den Rand gerückten PFD-Anzeigen und einer im Mittelbereich dargestellten, für den Anflug wesentlichen zusätzlichen Anzeigen über geortete Hindernisse und/oder Flugtunnels besteht.

6. Allwetter-Navigationsdisplay nach Anspruch 5, **dadurch gekennzeichnet, daß** der Inhalt der zentralen Displayfläche über die mit Hilfe von Angaben auf dem Display bezeichneten seitlichen Funktionstasten auswählbar ist.

## Claims

1. All-weather navigation display for helicopters with an electronic screen display device, **characterised in that** the electronically controllable display face is surrounded by a frame, operating keys with fixed functions being arranged on the lower edge thereof and operating keys with variable functions being arranged on the lateral edges thereof, the values of the former being adjustable by rotary sensors arranged at the corners of the frame and the current function of the latter being shown on the display.

2. All-weather navigation display according to claim 1, **characterised in that** the content of the display face consists in normal flight in NAV mode, navigation mode, of the data on the HSI values, horizontal situation indicator, on the left-hand half of the display face and of the data on the PFD values, primary flight display, on the right-hand half of the display face and **in that** the halves can be switched in the display frame via a SHIFT key.

3. All-weather navigation display according to claim 2, **characterised in that** the data on the HSI values, horizontal situation indicator, can be underlaid by a map.

4. All-weather navigation display according to claim 2 or 3, **characterised in that** the essential displays consist of round displays and the normal values thereof can be shown in horizontal or vertical pointer positions.

5. All-weather navigation display according to any one of the preceding claims, **characterised in that** the content of the display face during flight in APP mode, approach mode, consists of the PFD displays moved laterally to the edge and an additional display essential to the approach flight shown in the central region, concerning localised obstacles and/or flight tunnels.

6. All-weather navigation display according to claim 5, **characterised in that** the content of the central display face can be selected via the lateral function keys indicated with the aid of data on the display.

## Revendications

1. Afficheur de navigation tout terrain pour un hélicoptère comportant un dispositif d'affichage d'images électroniques,
**caractérisé en ce que**
la surface d'affichage à commande électronique est entourée d'un cadre dont l'arête inférieure porte des touches de fonctionnement ayant des fonctions fixes et dont les côtés latéraux ont des touches de commande des fonctions variables,
les valeurs des premières étant réglées avec des boutons tournants ayant au coin du cadre et la fonction actuelle des dernières étant affichée sur l'afficheur.

2. Afficheur de navigation tout terrain selon la revendication 1,
**caractérisé en ce que**
le contenu de la surface d'affichage en vol normal, en mode NAV (mode de navigation) apparaît sur la moitié gauche de la surface d'affichage à partir des indications des valeurs HSI (indicateur de situation horizontale), et sur la demi-surface droite d'affichage à partir des indications concernant des valeurs PFD, afficheur de vol primaire, et les moitiés peuvent être échangées dans le cadre de l'afficheur par une touche de décalage.

3. Afficheur de navigation tout terrain selon la revendication 2,
**caractérisé en ce que**
les indications concernant les valeurs HSI (indicateur de situation horizontale) sont soutenues par une carte géographique.

4. Afficheur de navigation tout terrain selon l'une quelconque des revendications 2 ou 3,
**caractérisé en ce que**
les affichages essentiels sont des affichages circulaires et les valeurs normales de ceux-ci sont données dans des représentations d'aiguille horizontale ou verticale.

5. Afficheur de navigation tout terrain selon l'une quelconque des revendications précédentes,
**caractérisé en ce que**
le contenu de la surface d'affichage en vol en mode APP (mode d'approche) est formé des indications PFD décalés latéralement vers le bord et d'un tunnel de vol et/ou d'un obstacle localisé, représenté dans la zone centrale, et qui correspond à des affichages supplémentaires importants pour le vol d'approche.

6. Afficheur de navigation tout terrain selon la revendication 5,
**caractérisé en ce que**
le contenu de la surface d'affichage centrale se sélectionne à l'aide des touches de fonction latérales décrites par des indications sur l'écran d'affichage.
